# EUROPÄISCHE PATENTSCHRIFT

(11) **EP 1 294 192 B1**
(45) Veröffentlichungstag und Bekanntmachung des Hinweises auf die Patenterteilung: **11.01.2006**
(21) Anmeldenummer: 02019694.5
(22) Anmeldetag: 04.09.2002
(51) Int. Cl.: H04N 7/088

(54) **Vorrichtung zum Empfang von Teletextsignalen**
Apparatus for receiving teletext signals
Dispositif pour la réception de signaux de télétexte

(30) Priorität: 15.09.2001 DE 10145652
(43) Veröffentlichungstag der Anmeldung: 19.03.2003
(73) Patentinhaber: Grundig Multimedia B.V., 1083HJ Amsterdam (NL)
(72) Erfinder: Finsterer, Harald, 90469 Nürnberg (DE); Payer, Wolfgang, 91448 Emskirchen (DE)
(74) Vertreter: Pröll, Jürgen

(56) Entgegenhaltungen:
- EP-A- 0 504 721
- EITZ G ET AL: "TOP - EIN VERFAHREN ZUR VEREINFACHTEN ANWAHL VON FERNSEHTEXT-TAFELNDURCH DEN ZUSCHAUER. TOP - A METHOD FOR SIMPLIFIED DIALING OF TELETEXT PAGES BY THE VIEWER" RUNDFUNKTECHNISCHE MITTEILUNGEN, MENSING. NORDERSTEDT, DE, Bd. 31, Nr. 2, 1. März 1987 (1987-03-01), Seiten 83-93, XP002031354 ISSN: 0035-9890

## Beschreibung

Die Erfindung betrifft eine Vorrichtung zum Empfang von Teletextsignalen, die in Form von nummerierten Teletextseiten in einem Teletextzyklus übertragen werden, wobei im Teletextzyklus Einfachseiten und Mehrfachseiten enthalten sind, mit einer Bedieneinheit zur Auswahl von gewünschten Teletextseiten, einem Teletextdecoder zum Suchen, Separieren und Decodieren der gewünschten Teletextseiten, einem Mehrseitenspeicher zum Speichern des Inhalts mehrerer Teletextseiten und einer Steuereinheit.

In der Zeitschrift "RUNDFUNKTECH. MITTEILUNGEN", Jg. 31 (1987) H. 2, Seiten 83 - 93, sind unter den Namen FLOF und TOP bekannt gewordene Verfahren zur vereinfachten Anwahl von Fernsehtext-Tafeln durch den Zuschauer beschrieben. Bei diesen Verfahren ist empfangsseitig ein Teletextdecoder vorgesehen, mittels welchem gleichzeitig nach Teletextseiten verschiedener Seitennummem gesucht werden kann. Dabei werden die Nummern dieser Seiten automatisch einer vorgegebenen Reihe einer momentan angezeigten Teletextseite entnommen. Bis der Zuschauer die momentan angezeigte Teletextseite gelesen hat, sind, falls schon ein Zyklus verstrichen ist, die nächsten Seiten bereits gespeichert und zum Abruf bereit.

Aus der EP-B1-0 504 721 ist ein Teletextempfänger bekannt, welcher eine Einrichtung für die parallele Erfassung mehrerer Teletextseiten mit unterschiedlichen Seitennummem während des gleichen Sendezyklus aufweist. Weiterhin enthält der Empfänger eine Einrichtung zum Speichern des Inhalts sämtlicher zu einem Seitenblock gehörender Unterseiten, von welchen die ausgewählte Teletextseite ein Teil ist, in einem geeigneten Speicher. Ferner ist eine Einrichtung vorgesehen, welche die direkte Auswahl jeder gespeicherten Unterseite einer gewählten Mehrfachseite gestattet, wobei dies unter Verwendung der Tasten "nächste Seite" und "vorherige Seite" einer Bedieneinheit erfolgt.

Wählt ein Benutzer eine Teletextseite aus, die eine Mehrfachseite mit mehreren Unterseiten ist, dann nimmt deren Auffinden und Abspeichem viel Zeit in Anspruch, da die Unterseiten einer Mehrfachseite auf mehrere aufeinanderfolgende Teletextzyklen verteilt sind. Börsen-, Sportergebnis-, Flughafeninformations- und Nachrichtenseiten stellen die typischen Vertreter laufend aktualisierter Mehrfachseiten dar. Für den Nutzer entsteht bei bestehenden Teletextsystemen das Problem, dass ohne Verlust der zeitaufwendig eingelesenen Mehrfachseiten keine anderen Seiten zwischenzeitlich besucht werden können, da die Mehrfachseiten durch neu angewählte Seiten wieder überschrieben werden und somit nicht mehr zur Verfügung stehen.

Der Erfindung liegt die Aufgabe zugrunde, eine Vorrichtung zum Empfang von Teletextsignalen anzugeben, bei welcher der vorstehend beschriebene Nachteil nicht auftritt.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass der Benutzer in der Zeit, die zum Auffinden einer gewünschten Teletextseite im Teletextzyklus notwendig ist, weitere Teletextseiten anwählen und betrachten kann. Dies ist insbesondere dann von Vorteil, wenn die erstgenannte Seite eine Mehrfachseite ist, die mehrere Unterseiten aufweist, zu deren Einlesen mehrere komplette Videotext-Zyklen abgewartet werden müssen.

Vorzugsweise kann zwischen abgespeicherten Teletextseiten im Sinne einer ZAPP-Funktion hin- und hergeschaltet werden.

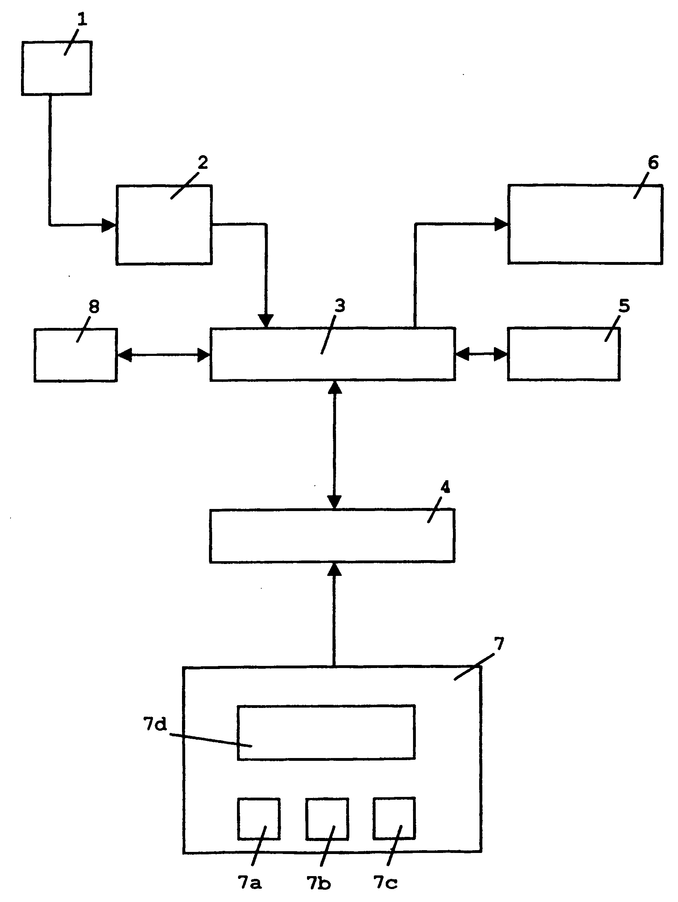

Weitere vorteilhafte Eigenschaften der Erfindung ergeben sich aus der nachfolgenden Erläuterung eines Ausführungsbeispiels anhand der Figur.

Diese zeigt ein Blockschaltbild mit den zum Verständnis der Erfindung notwendigen Bestandteilen einer Vorrichtung zum Empfang von Teletextsignalen. Diese werden in Form von nummerierten Teletextseiten in einem Teletextzyklus übertragen, wobei im Teletextzyklus Einfachseiten und Mehrfachseiten enthalten sind. Die Mehrfachseiten weisen jeweils mehrere Unterseiten auf, die in aufeinanderfolgenden Teletextzyklen übertragen werden.

Die dargestellte Vorrichtung weist eine Empfangsantenne 1 auf, deren Ausgangssignale an eine einen Tuner und eine Zwischenfrequenzstufe aufweisende Empfangsschaltung 2 weitergeleitet werden. An den Ausgang der Empfangsstufe ist ein Teletextdecoder 3 angeschlossen, mittels welchem im Teletextdatenstrom nach einer gewünschten Seite gesucht wird. Ist diese gefunden, wird sie aus dem Teletextdatenstrom separiert und decodiert. Der Inhalt der decodierten Seite wird in einem Mehrseitenspeicher 5 abgespeichert und auch auf einer Anzeigeeinheit 6 dargestellt.

Die Auswahl einer gewünschten Teletextseite erfolgt durch eine Bedieneinheit 7, welche Zifferntasten 7d zur Eingabe der Seitennummer einer gewünschten Teletextseite aufweist. Die mittels der Bedieneinheit eingegebenen Bedienbefehle werden an eine Steuereinheit 4 weitergeleitet, die zur Steuerung des Teletextdecoders in Abhängigkeit von den eingegebenen Bedienbefehlen vorgesehen ist.

Gemäß der Erfindung weist die Bedieneinheit eine ZAPP-Taste 7a auf, unter deren Verwendung ein Zappen im Teletextangebot des momentan eingestellten Fernsehsenders möglich ist, welchem eine Programmnummer zugeordnet ist. Dies geschieht wie folgt:

In einem ersten Schritt wird durch Eingabe einer Teletextseitennummer mittels der Zifferntasten 7d der Bedieneinheit 7 ein Bedienbefehl eingegeben, welcher über die Steuereinheit 4 an den Teletextdecoder 3 weitergegeben wird. Dieser beginnt aufgrund des eingegebenen Bedienbefehls damit, im Teletextdatenstrom des eingestellten Senders nach der gewünschten Teletextseite zu suchen. Dieser Suchvorgang kann, wenn es sich bei der gewünschten Teletextseite um eine Einfachseite handelt, bis zu 30 Sekunden dauern. Handelt es sich bei der gewünschten Teletextseite um eine Mehrfachseite mit mehreren Unterseiten, dann kann es mehrere Minuten dauern, bis alle zur gewünschten Teletextseite gehörigen Unterseiten im Teletextdatenstrom gefunden und deren Inhalt im Mehrseitenspeicher 5 abgespeichert ist.

Diese Wartezeit auf eine angewählte Seite kann dadurch überbrückt werden, dass nach Eingabe der ersten Teletextseitennummer die ZAPP-Taste 7a der Bedieneinheit 7 betätigt und danach mittels der Zifferntasten 7d der Bedieneinheit 7 eine zweite Teletextseitennummer eingegeben wird. Durch die Eingabe des genannten ZAPP-Befehles mittels der ZAPP-Taste 7a erkennt die Steuereinheit 4, dass die Vorrichtung im ZAPP-Betrieb arbeiten soll und steuert den Teletextdecoder 3 derart an, dass dieser im Teletextdatenstrom gleichzeitig nach der eingegebenen ersten Teletextseitennummer und nach der eingegebenen zweiten Teletextseitennummer sucht.

Findet der Teletextdecoder 3 die gewünschte erste Teletextseitennummer, dann separiert er die zugehörige Seite aus dem Teletextdatenstrom, decodiert diese und speichert deren Inhalt im Mehrseitenspeicher 5 ab. Handelt es sich bei der gewünschten Teletextseite um eine Mehrfachseite, dann werden zeitlich aufeinanderfolgend die Inhalte aller Unterseiten der gewünschten Teletextseite im Mehrseitenspeicher 5 abgelegt und gegen überschreiben durch eine zusätzliche oder weitere oder zeitgleiche Seitensuche geschützt, wie dies bei Top-Text bzw. FLOF-Seiten der Fall sein könnte.

Findet der Teletextdecoder 3 die gewünschte zweite Teletextseitennummer, dann separiert er die zugehörige Seite aus dem Teletextdatenstrom, decodiert diese und speichert deren Inhalt im Mehrseitenspeicher 5 ab. Weiterhin wird der Inhalt dieser zweiten gewünschten Teletextseite auch auf der Anzeigeeinheit 6 dargestellt.

Möchte der Benutzer den Inhalt der im Hintergrund gesuchten und abgespeicherten ersten Teletextseite sehen, dann betätigt er die ZAPP-Taste 7a ein zweites Mal. Augrund dieses Befehles initiiert die Steuereinheit 4 ein Auslesen des Inhalts der im Mehrseitenspeicher 5 abgespeicherten ersten Teletextseite.

Durch eine wiederholte Betätigung der ZAPP-Taste 7a kann der Benutzer zwischen den im Mehrseitenspeicher 5 abgespeicherten Teletextseiten hin- und herblättern, so dass diese nacheinander aus dem Mehrseitenspeicher 5 ausgelesen und auf der Anzeige 6 dargestellt werden.

Handelt es sich bei einer der abgespeicherten Seiten um eine Mehrfachseite, dann kann entweder durch eine wiederholte Betätigung der ZAPP-Taste 7a, durch zusätzliche Verwendung der +/-- Tasten 7b und 7c oder unter Verwendung eines Cursors und einer zugehörigen Unterseitenwahlleiste auf der Anzeige 6 eine Umschaltung zwischen den abgespeicherten Teletextseiten erfolgen, so dass deren Inhalt jeweils aus dem Mehrseitenspeicher 5 ausgelesen und auf der Anzeige 6 dargestellt wird.

Nach alledem besteht ein wesentlicher Vorteil der Erfindung darin, dass die beanspruchte Vorrichtung gleichzeitig nach verschiedenen, vom Benutzer angewählten Teletextseiten suchen kann. Sind diese Seiten gefunden, dann wird deren Inhalt im Mehrseitenspeicher abgespeichert und kann von dort abgerufen werden, um eine aufeinanderfolgende Bildschirmdarstellung der abgespeicherten Seiten durchzuführen.

Vorzugsweise wird nach der Aktivierung der ZAPP-Funktion mittels der ZA-PP-Taste 7a auf der Anzeige 6 der Status der ZAPP-Funktion angezeigt. Dabei wird ein ZAPP-Symbol, die Seitennummer der jeweiligen Teletextseite und ein Einlese- bzw. Aktualisierungshinweis in der Kopf- oder Fußzeile des Bildschirms dargestellt.

Dies ermöglicht es dem Benutzer, die Beendigung des Einlesens der jeweiligen Teletextseite oder die Beendigung einer Aktualisierung der jeweiligen Teletextseite zu erkennen und sofort nach dieser Beendigung auf die im Hintergrund gesuchte und abgespeicherte Seite zuzugreifen. Weiterhin kann in diesem Zusammenhang auch eine LED-Anzeige oder ein Blinken der jeweiligen Teletextseitennummer verwendet werden, um dem Benutzer den Status der aktivierten Teletext-ZAPP-Funktion zu signalisieren.

Vorzugsweise werden bei aktivierter ZAPP-Funktion automatisch oder durch betätigen einer Funktionstaste auch die Nummer der jeweiligen Teletextseite und die zugehörige Programmnummer in einem nichtflüchtigen Speicher 8 abgelegt. Dies hat den Vorteil, dass nach einem Aus- und Wiedereinschalten eines die beanspruchte Vorrichtung aufweisenden Fernsehgerätes im Hintergrund erneut nach der jeweiligen Teletextseite gesucht und deren Inhalt nach dem Auffinden im Mehrseitenspeicher abgelegt wird.

Wird bei aktivierter ZAPP-Funktion mittels der Stationstasten des jeweiligen Fernsehgerätes eine Umschaltung auf einen anderen Sender durchgeführt oder wird das Fernsehgerät ausgeschaltet oder in den Standby-Betrieb gebracht, so geht der Inhalt des Mehrseitenspeichers verloren, wodurch der ZAPP-Speicherbereich für das Teletextangebot des neu angewählten Senders freigegeben wird.

Soll bei aktiviertem ZAPP-Betrieb eine andere Teletextseite als ZAPP-Seite festgelegt werden, so erfolgt zunächst ein Aufheben der bestehenden ZAPP-Markierung durch Betätigung einer Funktionstaste der Bedieneinheit 7, eine nachfolgende Eingabe der Seitennummer der gewünschten anderen ZAPP-Seite und eine erneute Betätigung der ZAPP-Taste 7a, um die ZAPP-Markierung erneut zu setzen.

## Patentansprüche

1. Vorrichtung zum Empfang von Teletextsignalen, die in Form von nummerierten Teletextseiten in einem Teletextzyklus übertragen werden, wobei im Teletextzyklus Einfachseiten und Mehrfachseiten enthalten sind, mit
- einer Bedieneinheit zur Auswahl von gewünschten Teletextseiten,
- einem Teletextdecoder zum Suchen, Separieren und Decodieren der gewünschten Teletextseiten,
- einem Mehrseitenspeicher zum Speichern des Inhalts mehrerer Teletextseiten,
- einer Steuereinheit, und
- einer Anzeigeeinheit,
**dadurch gekennzeichnet, dass**
- die Bedieneinheit (7) eine Taste (7a) aufweist, nach deren Betätigung der Teletextdecoder (3) im Teletextzyklus nach einer vorher ausgewählten, ersten Teletextseite weitersucht und erst nach deren Betätigung eine weitere, zweite Teletextseite auswählbar ist, wobei die ersten Teletextseite eine Mehrfachseite ist und die zweite Teletextseite von der ersten Teletextseite nicht abhängig ist, und
- der Teletextdecoder (3) nach der Auswahl der zweiten Teletextseite gleichzeitig nach der ersten und zweiten Teletextseite sucht.

2. Vorrichtung nach Anspruch 1,
**dadurch gekennzeichnet, dass**
der Inhalt der ausgewählten ersten Teletextseite nach deren Auffinden im Mehrseitenspeicher (5) abgespeichert wird.

3. Vorrichtung nach Anspruch 2,
**dadurch gekennzeichnet, dass**
Teletextdecoder (5) nach allen Unterseiten der Mehrfachseite sucht und der Inhalt dieser Unterseiten nach deren Auffinden jeweils im Mehrseitenspeicher (5) abgelegt wird.

4. Vorrichtung nach Anspruch 2 oder 3,
**dadurch gekennzeichnet, dass**
der Inhalt der abgespeicherten ersten Teletextseite nach einer Betätigung einer Taste (7a) der Bedieneinheit (7) auf der Anzeigeeinheit (6) dargestellt wird.

5. Vorrichtung nach einem der vorhergehenden Ansprüche,
**dadurch gekennzeichnet, dass**
der Inhalt der zweiten Teletextseite nach deren Auffinden im Mehrseitenspeicher (5) abgespeichert wird.

6. Vorrichtung nach Anspruch 5,
**dadurch gekennzeichnet, dass**
die Bedieneinheit (7) eine oder mehrere Tasten (7a, 7b, 7c) aufweist, bei deren wiederholter Betätigung die abgespeicherten Seiten nacheinander zu einer Darstellung auf der Anzeige (6) aus dem Mehrseitenspeicher (5) auslesbar sind.

7. Vorrichtung nach einem der vorhergehenden Ansprüche,
**dadurch gekennzeichnet, dass**
sie einen nichtflüchtigen Speicher (8) aufweist, welcher zur Abspeicherung der Seitennummer der ersten Teletextseite und der zugehörigen Programmnummer vorgesehen ist.

8. Vorrichtung nach einem der vorhergehenden Ansprüche,
**dadurch gekennzeichnet, dass**
die Anzeigeeinheit (6) zur Anzeige einer Statusinformation vorgesehen ist, welche Informationen über den mittels des Teletextdecoders (3) durchgeführten Suchvorgang aufweist.

9. Vorrichtung nach Anspruch 8,
**dadurch gekennzeichnet, dass**
die Statusinformation in einer Kopf- oder Fußzeile der Anzeigeeinheit (6) angezeigt wird.

10. Vorrichtung nach Anspruch 8 oder 9,
**dadurch gekennzeichnet, dass**
die Statusinformation ein den aktivierten Suchvorgang signalisierendes Symbol aufweist.

## Claims

1. Device for receiving teletext signals that are transmitted in the form of numbered teletext pages in a teletext cycle, wherein the teletext cycle contains single pages and multipages, comprising
- an operating unit for selecting the desired teletext pages,
- a teletext decoder for finding, separating and decoding the desired teletext pages,
- a multipage memory for storing the content of a plurality of teletext pages,
- a control unit, and
- a display unit,
**characterized in that**
- the operating unit (7) comprises a key (7a) after whose actuation the teletext decoder (3) next searches for a previously selected, first teletext page in the teletext cycle and a further, second teletext page can be selected only after its actuation, wherein the first teletext page is a multipage and the second teletext page is independent of the first teletext page, and
- after selecting the second teletext page, the teletext decoder (3) simultaneously searches for the first and second teletext page.

2. Device according to Claim 1, **characterized in that** the content of the selected first teletext page is stored in the multipage memory (5) after it is found.

3. Device according to Claim 2, **characterized in that** teletext decoder (5) searches for all the subpages of the multipage and the content of said subpages is stored in each case in the multipage memory (5) after they are found.

4. Device according to Claim 2 or 3, **characterized in that** the content of the stored first teletext page is displayed on the display unit (6) after actuating a key (7a) of the operating unit (7).

5. Device according to any one of the preceding claims, **characterized in that** the content of the second teletext page is stored in the multipage memory (5) after it is found.

6. Device according to Claim 5, **characterized in that** the operating unit (7) has one or more keys (7a, 7b, 7c), on the repeated actuation whereof the stored pages can be read consecutively out of the multipage memory (5) for the purpose of display on the display (6).

7. Device according to any one of the preceding claims, **characterized in that** it comprises a non-volatile memory (8) provided for storing the page number of the first teletext page and the associated programme number.

8. Device according to any one of the preceding claims, **characterized in that** the display unit (6) is provided for displaying status information that comprises information items about the search operation performed by means of the teletext decoder (3).

9. Device according to Claim 8, **characterized in that** the status information is displayed in a header or footer line of the display unit (6).

10. Device according to Claim 8 or 9, **characterized in that** the status information comprises a symbol signalling the activated search operation.

## Revendications

1. Dispositif pour la réception de signaux télétexte, qui sont transmis sous la forme de pages télétexte numérotées dans un cycle de diffusion de pages télétexte, où des pages simples et des pages multiples sont contenues dans le cycle de diffusion de pages télétexte, équipé
- d'une télécommande en vue du choix de pages télétexte désirées,
- d'un décodeur télétexte pour chercher, séparer et décoder les pages télétexte désirées,
- d'une mémoire de pages multiples pour mémoriser le contenu de plusieurs pages télétexte,
- d'une unité de commande, et
- d'une unité de d'affichage,
**caractérisé en ce que**
- la télécommande (7) présente une touche (7a), après l'actionnement de laquelle le décodeur télétexte (3) recherche dans le cycle de diffusion de pages télétexte une première page télétexte préalablement choisie et juste après l'actionnement de laquelle une autre seconde page télétexte peut être choisie, où la première page télétexte est une page multiple et la seconde page télétexte n'est pas dépendante de la première page télétexte, et
- le décodeur télétexte (3) cherche simultanément la première et la seconde page télétexte après le choix de la seconde page télétexte.

2. Dispositif selon la revendication 1, **caractérisé en ce que** le contenu de la première page télétexte choisie est mémorisé après l'avoir trouvé dans la mémoire de pages multiples (5).

3. Dispositif selon la revendication 2, **caractérisé en ce que** le décodeur télétexte (5) recherche toutes les sous-pages des pages multiples et le contenu de ces sous-pages est stocké respectivement dans la mémoire de pages multiples (5) après les avoir trouvées.

4. Dispositif selon la revendication 2 ou 3, **caractérisé en ce que** le contenu des premières pages télétexte mémorisées est représenté sur l'unité d'affichage (6) après l'actionnement d'une touche (7a) de la télécommande (7).

5. Dispositif selon l'une des revendications précédentes, **caractérisé en ce que** le contenu de la seconde page télétexte est stocké dans la mémoire de pages multiples (5) après l'avoir trouvée.

6. Dispositif selon la revendication 5, **caractérisé en ce que** la télécommande (7) présente une ou plusieurs touches (7a, 7b, 7c), grâce à l'actionnement répété desquelles les pages mémorisées peuvent être lues l'une après l'autre à partir de la mémoire de pages multiples (5) en vue d'un affichage sur l'unité (6).

7. Dispositif selon l'une des revendications précédentes, **caractérisé en ce qu'**il présente une mémoire non volatile (8), qui est prévue en vue de la mémorisation des numéros de pages de la première page télétexte et des numéros de programmes associés.

8. Dispositif selon l'une des revendications précédentes, **caractérisé en ce que** l'unité d'affichage (6) est prévue en vue de l'affichage d'une information d'état, qui présente des informations concernant le processus de recherche effectué grâce au décodeur télétexte (3).

9. Dispositif selon la revendication 8, **caractérisé en ce que** l'information d'état est affichée dans un en-tête ou un bas de page de l'unité d'affichage (6).

10. Dispositif selon la revendication 8 ou 9, **caractérisé en ce que** l'information d'état présente un symbole signalisant le processus de recherche activé.
